(19) Europäisches Patentamt
European Patent Office
Office européen des brevets

(11) **EP 3 236 605 B1**

(12) **EUROPEAN PATENT SPECIFICATION**

(45) Date of publication and mention
of the grant of the patent:
**20.02.2019 Bulletin 2019/08**

(51) Int Cl.:
***H04L 1/00*** *(2006.01)*    ***H04B 7/06*** *(2006.01)*

(21) Application number: **14908206.7**

(22) Date of filing: **18.12.2014**

(86) International application number:
**PCT/CN2014/094250**

(87) International publication number:
**WO 2016/095171 (23.06.2016 Gazette 2016/25)**

(54) **PRE-CODING METHOD, DEVICE AND SYSTEM**

VORCODIERUNGSVERFAHREN, -VORRICHTUNG UND -SYSTEM

PROCÉDÉ, DISPOSITIF, ET SYSTÈME DE PRÉ-CODAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.10.2017 Bulletin 2017/43**

(73) Proprietor: **Huawei Technologies Co., Ltd.**
**Longgang District**
**Shenzhen, Guangdong 518129 (CN)**

(72) Inventors:
• **LI, Qiaojie**
**Shenzhen**
**Guangdong 518129 (CN)**
• **WANG, Xiang**
**Shenzhen**
**Guangdong 518129 (CN)**
• **ZHOU, Bin**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**WO-A1-2012/157393      WO-A1-2014/054043**
**WO-A1-2014/100991      CN-A- 102 545 984**
**CN-A- 103 166 688      CN-A- 103 731 233**

• **WEI DONG ET AL: "G.fast for FTTdp: Enabling gigabit copper access", 2014 IEEE GLOBECOM WORKSHOPS (GC WKSHPS), IEEE, 8 December 2014 (2014-12-08), pages 668-673, XP032747977, DOI: 10.1109/GLOCOMW.2014.7063509 [retrieved on 2015-03-18]**
• **GEORGE GINIS ET AL: "Vectored Transmission for DigitalSubscriber Line Systems", IEEE JOURNAL ON SELECTED AREAS IN COMMUNICATIONS, IEEE SERVICE CENTER, PISCATAWAY, US, vol. 20, no. 5, 5 June 2002 (2002-06-05), XP011065493, ISSN: 0733-8716**

**Description**

**TECHNICAL FIELD**

Embodiments of the present invention relate to communications technologies, and in particular, to a precoding method, an apparatus, and a system.

**BACKGROUND**

A digital subscriber line (Digital Subscriber Line, DSL for short) is a technology that transmits high-speed data on a phone twisted pair. A broadband access technology over copper (G.fast) is a latest DSL technology and is also referred to as a gigabit DSL. G.fast uses 100 MHz and even 200 MHz high frequency bands, and causes extremely serious crosstalk at the high frequency bands. Therefore, a precoding manner is used at a central office (Central Office, CO for short) to eliminate impact of far end crosstalk (Far End Crosstalk, FEXT for short). Currently, there are mainly two precoding manners: linear precoding and non-linear precoding.

Currently, a customer premises equipment (CPE for short) supporting linear precoding and a CPE supporting non-linear precoding coexist. There are two simple methods for adapting to the two types of CPEs. In a first method, the linear precoding manner is set for the CO provided that the CPE only supporting linear precoding exists. In this way, the linear precoding manner is also used for the CPE only supporting non-linear precoding. This can reach a maximum rate at the cost of the CPE supporting non-linear precoding. In a second method, the non-linear precoding manner is set for the CO. In this way, a rate of the CPE supporting non-linear precoding increases to a maximum value, but a rate of the CPE supporting linear precoding is greatly affected, and instability of the CPE supporting linear precoding is even caused.

In both of the foregoing methods, linear precoding and non-linear precoding coexist at the cost of a rate of one type of CPEs. The two precoding manners are not effectively used to maintain reachable rates of the two types of CPEs, and a great quantity of bit errors may be even generated, causing the CPEs to get offline, and causing instability of an entire DSL system. Document WO 2014/054043 A1 describes a method employing linear preceding and non-linear precoding for transmitting data between at least two transmitters and a plurality of receivers via a plurality of communication channels over a plurality of subcarrier frequencies, the method comprising the procedures of transmitting by either one of said at least two transmitters, at least two training signals to respective said receivers; receiving by respective said receivers, said at least two training signals; evaluating channel characteristics of at least part of said communication channels, according to said at least two training signals; determining a precoding scheme selection that defines for at least part of said communication channels, over which of said subcarrier frequencies, said data transmitted shall be preceded using either one of linear precoding and non-linear precoding, according to evaluated said channel characteristics; precoding said data according to determined said precoding scheme selection; and transmitting said data according said precoding scheme selection.

**SUMMARY**

The invention is set out in the appended set of claims. Embodiments of the present invention provide a precoding method according to claim 1 and an apparatus according to claim 5, so as to achieve a win-win effect of maintaining a rate of a linear CPE and improving a rate of a non-linear CPE, decrease a bit error rate, and improve system stability.

According to a first aspect, an embodiment of the present invention provides a precoding method, including:

obtaining a channel matrix on each subcarrier, where the channel matrix includes channel vectors of all CPEs on the subcarrier, and the CPEs include a linear CPE supporting linear precoding and a non-linear CPE supporting non-linear precoding;
obtaining a precoding matrix by means of calculation according to the channel matrix, where the precoding matrix includes a precoding submatrix used to eliminate crosstalk between non-linear CPEs, a precoding submatrix used to eliminate crosstalk between linear CPEs, and a precoding submatrix used to eliminate crosstalk between the non-linear CPE and the linear CPE;
performing, according to the channel matrix, non-linear precoding on a signal to be sent to the non-linear CPE; and
performing linear precoding on to-be-sent signals according to the precoding matrix, where the to-be-sent signals include a signal to be sent to the linear CPE and the signal that is to be sent to the non-linear CPE and on which non-linear precoding has been performed.

With reference to the first aspect, in a first possible implementation of the first aspect, the obtaining a precoding matrix by means of calculation according to the channel matrix includes:

obtaining the precoding matrix by means of calculation according to the channel matrix and by using a preset method.

With reference to the first aspect or the first possible implementation of the first aspect, in a second possible implementation of the first aspect, before the performing, according to the channel matrix, non-linear precoding on a signal to be sent to the non-linear CPE, the method further includes:

obtaining a power control matrix by means of calculation according to the precoding matrix, where the power control matrix includes a power control factor for performing power control on the signal to be sent to the linear CPE, and a power control factor for performing power control on the signal to be sent to the non-linear CPE; and

performing, according to the power control matrix, power control on the signal to be sent to the linear CPE and the signal to be sent to the non-linear CPE, and sending the power control factors in the power control matrix to the non-linear CPE and the linear CPE respectively.

With reference to any one of the first aspect, or the first to the second possible implementations of the first aspect, in a third possible implementation of the first aspect, the method is executed by a central office CO device.

According to a second aspect, an embodiment of the present invention provides a central office CO apparatus, including:

a matrix obtaining module, configured to: obtain a channel matrix on each subcarrier, where the channel matrix includes channel vectors of all CPEs on the subcarrier, and the CPEs include a linear CPE supporting linear precoding and a non-linear CPE supporting non-linear precoding; and obtain a precoding matrix by means of calculation according to the channel matrix, where the precoding matrix includes a precoding submatrix used to eliminate crosstalk between non-linear CPEs, a precoding submatrix used to eliminate crosstalk between linear CPEs, and a precoding submatrix used to eliminate crosstalk between the non-linear CPE and the linear CPE;

a non-linear precoding module, configured to perform, according to the channel matrix, non-linear precoding on a signal to be sent to the non-linear CPE; and a linear precoding module, configured to perform linear precoding on to-be-sent signals according to the precoding matrix, where the to-be-sent signals include a signal to be sent to the linear CPE and the signal that is to be sent to the non-linear CPE and on which non-linear precoding has been performed.

With reference to the second aspect, in a first possible implementation of the second aspect, the matrix obtaining module is specifically configured to obtain the precoding matrix by means of calculation according to the channel matrix and by using a preset method.

With reference to the second aspect or the first possible implementation of the second aspect, in a second possible implementation of the second aspect, the apparatus further includes:

a power control module, configured to: obtain a power control matrix by means of calculation according to the precoding matrix, where the power control matrix includes a power control factor for performing power control on the signal to be sent to the linear CPE, and a power control factor for performing power control on the signal to be sent to the non-linear CPE; and perform, according to the power control matrix, power control on the signal to be sent to the linear CPE and the signal to be sent to the non-linear CPE, and send the power control factors in the power control matrix to the non-linear CPE and the linear CPE respectively.

According to a third aspect, an embodiment of the present invention provides a central office CO device, including:

a processor, configured to: obtain a channel matrix on each subcarrier, where the channel matrix includes channel vectors of all CPEs on the subcarrier, and the CPEs include a linear CPE supporting linear precoding and a non-linear CPE supporting non-linear precoding; obtain a precoding matrix by means of calculation according to the channel matrix, where the precoding matrix includes a precoding submatrix used to eliminate crosstalk between non-linear CPEs, a precoding submatrix used to eliminate crosstalk between linear CPEs, and a precoding submatrix used to eliminate crosstalk between the non-linear CPE and the linear CPE; perform, according to the channel matrix, non-linear precoding on a signal to be sent to the non-linear CPE; and perform linear precoding on to-be-sent signals according to the precoding matrix, where the to-be-sent signals include a signal to be sent to the linear CPE and the signal that is to be sent to the non-linear CPE and on which non-linear precoding has been performed.

With reference to the third aspect, in a first possible implementation of the third aspect, the processor is specifically configured to obtain the precoding matrix by means of calculation according to the channel matrix and by using a preset method.

With reference to the third aspect or the first possible implementation of the third aspect, in a second possible implementation of the third aspect, the device further includes a transmitter, where

the processor is further configured to: obtain a power control matrix by means of calculation according to the precoding matrix, where the power control matrix includes a power control factor for performing power control on the signal to be sent to the linear CPE, and a power control factor for performing power control on the signal to be sent to the non-linear CPE; and perform, according to the power control matrix, power control on the signal to be sent to the linear CPE and the signal to be sent to the non-linear CPE; and

the transmitter is configured to send the power control factors in the power control matrix to the non-linear CPE and the linear CPE respectively.

According to a fourth aspect, an embodiment of the present invention provides a digital subscriber line DSL system, including a central office CO device and a customer premises equipment CPE device, where the CO device and the CPE device are connected by using a twisted pair, and the CO device uses the device according to any one of the third aspect, or the first to the second possible implementations of the third aspect.

According to the precoding method, the apparatus, and the system that are provided in the embodiments of the present invention, a combination of non-linear precoding and linear precoding is additionally used to precode a signal to be sent to a linear CPE and a signal to be sent to a non-linear CPE. This achieves a win-win effect of maintaining a rate of the linear CPE and improving a rate of the non-linear CPE, and can decrease a bit error rate and improve system stability.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a flowchart of an embodiment of a precoding method according to the present invention;
FIG. 2 is a flowchart of another embodiment of a precoding method according to the present invention;
FIG. 3 is a flowchart of still another embodiment of a precoding method according to the present invention;
FIG. 4 is a flowchart of yet another embodiment of a precoding method according to the present invention;
FIG. 5 is a schematic structural diagram of an embodiment of a CO apparatus according to the present invention;
FIG. 6 is a schematic structural diagram of another embodiment of a CO apparatus according to the present invention;
FIG. 7 is a schematic structural diagram of still another embodiment of a CO apparatus according to the present invention;
FIG. 8 is a schematic structural diagram of an embodiment of a CO device according to the present invention;
FIG. 9 is a schematic structural diagram of another embodiment of a CO device according to the present invention; and
FIG. 10 is a schematic structural diagram of an embodiment of a DSL system according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

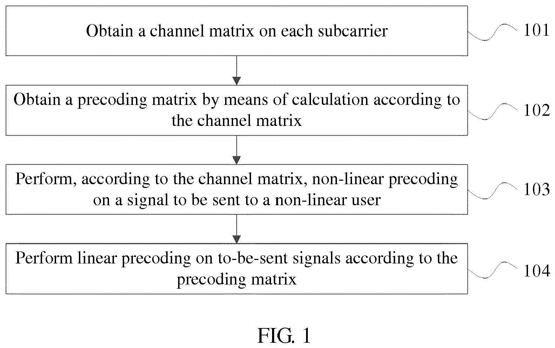

FIG. 1 is a flowchart of an embodiment of a precoding method according to the present invention. As shown in FIG. 1, the method in this embodiment may include the following steps.

Step 101. Obtain a channel matrix on each subcarrier.

The channel matrix includes channel vectors of all CPEs on the subcarrier, and the CPEs include a linear CPE supporting linear precoding and a non-linear CPE supporting non-linear precoding.

A G.fast system uses a vectoring (Vectoring) technology to eliminate crosstalk between multiple signals, and includes a CO device and a CPE device. The CO device is a network-side device such as a vectoring control entity (Vectoring Control Entity, VCE for short), a switch, or a cabinet, and may further include a distributed access point unit (Distributed Point Unit, DPU for short). The CPE device is CPE equipment, for example, a modem (modem). A CO side and a CPE side each include M (M is greater than 1) transceivers. The M transceivers on the CPE side are in different modems, and the M transceivers on the CO side are centralized on the DPU. When the CO device performs downlink transmission to the CPE device, the M transceivers of the CO device are used as transmit ends, the M transceivers of the CPE device are used as receive ends, and each transmit end corresponds to one receive end. The G.fast system may use two precoding manners: linear precoding and non-linear precoding.

This embodiment may be executed by the CO device. The CO device obtains the channel matrix corresponding to each subcarrier. The channel matrix is a channel matrix including channel vectors of all CPEs on the subcarrier. All the CPEs include a linear CPE supporting linear precoding and a non-linear CPE supporting non-linear precoding. A quantity of subcarriers is equal to a quantity of channel matrices. In this embodiment, different subcarriers have different frequency bands. On each subcarrier, the CO device may use a frequency band of the subcarrier to send a signal to CPE equipment. Therefore, on each subcarrier, all CPE equipments each can obtain a channel vector correspondingly. A matrix including the channel vectors of all the CPEs is the channel matrix on the subcarrier. The CPE equipment may support linear precoding, or may be upgraded to support non-linear precoding. Therefore, the channel matrix includes a channel submatrix of the linear CPE and a channel submatrix of the non-linear CPE.

Step 102. Obtain a precoding matrix by means of calculation according to the channel matrix. The precoding matrix includes a submatrix used to eliminate crosstalk betweennon-linear CPEs, a submatrix used to eliminate crosstalk between linear CPEs, and a submatrix used to eliminate crosstalk between the non-linear CPE and the linear CPE.

The CO device obtains the precoding matrix by means of calculation according to the channel matrix. Because channel matrices are corresponding to subcarriers, obtained precoding matrices are also in a one-to-one correspondence with the subcarriers. The precoding matrix includes three submatrices: a precoding submatrix for crosstalk between the non-linear CPEs, a precoding submatrix for crosstalk between the linear CPEs, and a precoding submatrix for crosstalk between the non-linear CPE and the linear CPE. The crosstalk between the non-linear CPE and the linear CPE may be further divided into crosstalk caused by the non-linear CPE on the linear CPE and crosstalk caused by the linear CPE on the non-linear CPE.

Step 103. Perform, according to the channel matrix, non-linear precoding on a signal to be sent to a non-linear CPE.

The CO device first uses non-linear precoding to process, according to the submatrix corresponding to the non-linear CPE in the channel matrix, the signal to be sent to the non-linear CPE. Because high-frequency crosstalk is serious in the G.fast system, a relatively notable signal to noise ratio (Signal to Noise, SNR for short) gain may be obtained by means of non-linear precoding. Currently, non-linear precoding mainly includes a precoding technology based on QR decomposition (that is, a matrix is decomposed as a product of an orthogonal matrix Q and an upper triangular matrix R), and a precoding technology based on LU decomposition (that is, a matrix is decomposed as a product of a lower triangular matrix L and an upper triangular matrix U). The present invention imposes no specific limitation thereon. The crosstalk between the non-linear CPEs can be eliminated by means of non-linear precoding, effectively improving a rate of the non-linear CPE.

Step 104. Perform linear precoding on to-be-sent signals according to the precoding matrix. The to-be-sent signals include a signal to be sent to the linear CPE and the signal that is to be sent to the non-linear CPE and on which non-linear precoding has been performed.

The CO device performs precoding on the to-be-sent signals according to the precoding matrix. For the precoding matrix, crosstalk of both the linear CPE and the non-linear CPE is considered. For the signal to be sent to the linear CPE, crosstalk from the non-linear CPE is canceled by means of linear precoding. In this way, a rate of the linear CPE can keep unchanged basically and an original rate of the linear CPE is maintained. For the signal to be sent to the non-linear CPE, crosstalk from the linear CPE is also canceled because both non-linear precoding and linear precoding are performed on the signal. In this way, a rate of the non-linear CPE is improved.

In this embodiment, a combination of non-linear precoding and linear precoding is additionally used to precode a signal to be sent to a linear CPE and a signal to be sent to a non-linear CPE. This achieves a win-win effect of maintaining a rate of the linear CPE and improving a rate of the non-linear CPE, decreases a bit error rate, and improves system stability.

The following uses several specific embodiments to detail the technical solution in the method embodiment shown in FIG. 1.

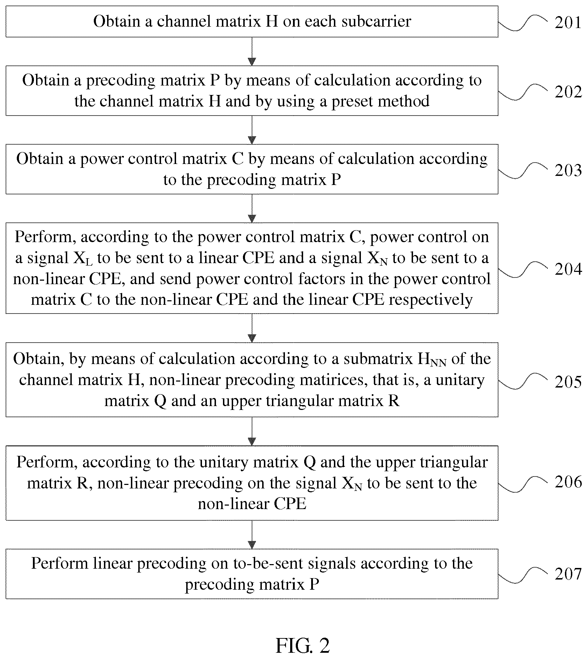

FIG. 2 is a flowchart of another embodiment of a precoding method according to the present invention. As shown in FIG. 2, the method in this embodiment may include the following steps.

Step 201. Obtain a channel matrix H on each subcarrier.

In this embodiment, the channel matrix on each subcarrier is $H = \begin{pmatrix} H_{NN} & H_{NL} \\ H_{LN} & H_{LL} \end{pmatrix}$. The channel matrix is calculated according to a value obtained based on an error or discrete Fourier transform (Discrete Fourier Transform, DFT for short) that is fed back when a pilot sequence is sent on a synchronization symbol (Sync symbol). $H_{NN}$ is a channel submatrix including a channel vector of a non-linear CPE, $H_{LL}$ is a channel submatrix including a channel vector of a linear CPE, and $H_{LN}$ and $H_{NL}$ are channel submatrices including channel vectors of the non-linear CPE and the linear CPE.

Step 202. Obtain a precoding matrix P by means of calculation according to the channel matrix H and by using a preset method.

In this step, $P = \begin{pmatrix} P_{NN} & P_{NL} \\ P_{LN} & P_{LL} \end{pmatrix} = \begin{pmatrix} H_{NN} & H_{NL} \\ H_{LN} & H_{LL} \end{pmatrix}^{-1} \begin{pmatrix} H_{NN} & 0 \\ 0 & I \end{pmatrix}$, where $P_{NN}$ is a precoding submatrix used to eliminate crosstalk between non-linear CPEs, $P_{LL}$ is a precoding submatrix used to eliminate crosstalk between linear CPEs, and $P_{NL}$ and $P_{LN}$ are precoding submatrices used to eliminate crosstalk between the non-linear CPE and the linear CPE.

Step 203. Obtain a power control matrix C by means of calculation according to the precoding matrix P.

The power control matrix C includes a power control factor for performing power control on a signal $X_L$ to be sent to the linear CPE, and a power control factor for performing power control on a signal $X_N$ to be sent to the non-linear CPE.

In this step, $C = \begin{pmatrix} C_N & 0 \\ 0 & C_L \end{pmatrix}$, where $C_N$ is a power control submatrix corresponding to the non-linear CPE,

$C_L$ is a power control submatrix corresponding to the linear CPE, and both $C_N$ and $C_L$ are diagonal matrices. The power control matrix C may be obtained by performing row-based and column-based square calculation on elements in the precoding matrix P. Specifically, $mur = \sqrt{\sum |P(:,i)|^2}$ is obtained by performing row-based square calculation on the elements in the precoding matrix P, and $muc = \sqrt{\sum |P(i,:)|^2}$ is obtained by means of column-based square calculation on the elements in the precoding matrix P. Then, a maximum value of $mur = \sqrt{\sum |P(:,i)|^2}$ and

$muc = \sqrt{\sum |P(i,:)|^2}$ is taken, that is, $mu1 = \max(mur, muc)$. $P2 = diag(\frac{1}{mu1}) * P$ is obtained by multiplying the precoding matrix P by a diagonal matrix constituted by the factor $mu1$. Then, $mu2 = \max(\sqrt{\sum |P2(:,i)|^2})$ is

obtained by performing row-based square calculation on P2. The power control matrix is $C = \frac{1}{mu2} \bullet diag(\frac{1}{mu1})$.

The power control matrix C may also be obtained by using another method, provided that a final power spectrum density (Power Spectral Density, PSD for short) of a signal meets a requirement.

Step 204. Perform, according to the power control matrix C, power control on a signal $X_L$ to be sent to a linear CPE and a signal $X_N$ to be sent to a non-linear CPE, and send power control factors in the power control matrix C to the non-linear CPE and the linear CPE respectively.

In this step, a calculation formula may be $x1 = \begin{pmatrix} C_N & 0 \\ 0 & C_L \end{pmatrix} \begin{pmatrix} X_N \\ X_L \end{pmatrix}$. In addition, elements in the power control submatrix $C_N$ need to be sent to the non-linear CPE and elements in the power control submatrix $C_L$ need to be sent to the linear CPE. Specifically, these elements may be sent to CPEs of the CPEs, so that the CPEs of the CPEs correspondingly restore the received signals.

Step 205. Obtain, by means of calculation according to a submatrix $H_{NN}$ of the channel matrix H, non-linear precoding matirices, that is, a unitary matrix Q and an upper triangular matrix R.

The unitary matrix Q and the upper triangular matrix R are obtained by means of QR decomposition on transpose of the channel submatrix $H_{NN}$.

Step 206. Perform, according to the unitary matrix Q and the upper triangular matrix R, non-linear precoding on the signal $X_N$ to be sent to the non-linear CPE.

In this step, a calculation formula may be $x2 = \begin{pmatrix} Q & 0 \\ 0 & I \end{pmatrix} \begin{pmatrix} (R^T)^{-1} & 0 \\ 0 & I \end{pmatrix} \begin{pmatrix} C_N & 0 \\ 0 & C_L \end{pmatrix} \begin{pmatrix} X_N \\ X_L \end{pmatrix}$. Herein, the upper triangular matrix R is used to perform serial non-linear precoding on the signal $X_N$. Any non-linear precoding manner readily figured out by persons skilled in the art is applicable to this, and details are not described herein.

Step 207. Perform linear precoding on to-be-sent signals according to the precoding matrix P. The to-be-sent signals include the signal $X_L$ to be sent to the linear CPE and the signal that is to be sent to the non-linear CPE and on which non-linear precoding has been performed.

In this step, a calculation formula may be $x = \begin{pmatrix} P_{NN} & P_{NL} \\ P_{LN} & P_{LL} \end{pmatrix} \begin{pmatrix} Q & 0 \\ 0 & I \end{pmatrix} \begin{pmatrix} (R^T)^{-1} & 0 \\ 0 & I \end{pmatrix} \begin{pmatrix} C_N & 0 \\ 0 & C_L \end{pmatrix} \begin{pmatrix} X_N \\ X_L \end{pmatrix}$.

Upon the foregoing process, a CO device performs precoding processing on all signals to be sent to CPEs, and the signals include a signal $X_L$ to be sent to a linear CPE and a signal $X_N$ to be sent to a non-linear CPE. A signal y received by the CPEs is:

$$y = Hx + n = \begin{pmatrix} H_{NN} & H_{NL} \\ H_{LN} & H_{LL} \end{pmatrix} \begin{pmatrix} P_{NN} & P_{NL} \\ P_{LN} & P_{LL} \end{pmatrix} \begin{pmatrix} Q & 0 \\ 0 & I \end{pmatrix} \begin{pmatrix} (R^T)^{-1} & 0 \\ 0 & I \end{pmatrix} \begin{pmatrix} C_N & 0 \\ 0 & C_L \end{pmatrix} \begin{pmatrix} X_N \\ X_L \end{pmatrix} + n$$

In this embodiment, a combination of non-linear precoding and linear precoding is additionally used to precode a signal to be sent to a linear CPE and a signal to be sent to a non-linear CPE. This achieves a win-win effect of maintaining a rate of the linear CPE and improving a rate of the non-linear CPE, decreases a bit error rate, and improves system stability.

Preferably, the CO device may multiply a precoding matrix P by a unitary matrix Q and save a product to preset storage space, and save an upper triangular matrix R to another preset storage space. In this way, in a precoding process, a matrix may be obtained directly from corresponding storage space for processing, thereby improving precoding efficiency.

Preferably, when sending a power control factor, the CO device may transmit the power control factor to a CPE end by means of transmitter initiated gain adjustment (Transmitter Initiated Gain Adjustment, TIGA for short).

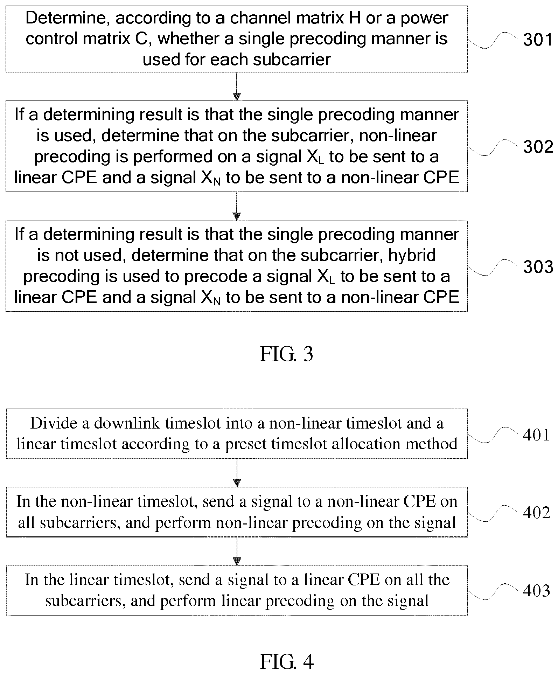

FIG. 3 is a flowchart of still another embodiment of a precoding method according to the present invention. As shown in FIG. 3, the method in this embodiment may include the following steps.

Step 301. Determine, according to a channel matrix H or a power control matrix C, whether a single precoding manner is used for each subcarrier.

If determining is performed according to the channel matrix H, equal level far end crosstalk (Equal Lever Far End Crosstalk, ELFEXT for short) may be calculated. If ELFEXT on a subcarrier is greater than a preset threshold, the single precoding manner is used. If determining is performed according to the power control matrix C, and if a minimum diagonal element of the power control matrix C is less than a preset threshold, the single precoding manner is used.

Step 302. If a determining result is that the single precoding manner is used, determine that on the subcarrier, non-linear precoding is performed on a signal $X_L$ to be sent to a linear CPE and a signal $X_N$ to be sent to a non-linear CPE.

A purpose of using non-linear precoding for all CPEs is to further improve a rate of a non-linear CPE. However, this method may affect a rate of a linear CPE. The impact on the linear CPE may be decreased by controlling a quantity of subcarriers that use non-linear precoding.

Step 303. If a determining result is that the single precoding manner is not used, determine that on the subcarrier, hybrid precoding is used to precode a signal $X_L$ to be sent to a linear CPE and a signal $X_N$ to be sent to a non-linear CPE.

Hybrid precoding is a precoding process in the method embodiment shown in FIG. 1 or FIG. 2, and details are not described herein again.

FIG. 4 is a flowchart of yet another embodiment of a precoding method according to the present invention. As shown in FIG. 4, the method in this embodiment may include the following steps:

Step 401. Divide a downlink timeslot into a non-linear timeslot and a linear timeslot according to a preset timeslot allocation method.

Step 402. In the non-linear timeslot, send a signal to a non-linear CPE on all subcarriers, and perform non-linear precoding on the signal.

Step 403. In the linear timeslot, send a signal to a linear CPE on all the subcarriers, and perform linear precoding on the signal.

A G.fast system supports time division duplex (Time Division Duplexing, TDD for short), and therefore may divide a downlink timeslot. For example, a downlink timeslot is divided into two time segments. Non-linear precoding is performed within one time segment and linear precoding is performed within the other time segment. A rate may be adjusted by adjusting a length of each time segment. In a linear timeslot, a signal is sent only to all linear CPEs, and only linear precoding is performed. In a non-linear timeslot, a signal is sent only to all non-linear CPEs, and only non-linear precoding is performed. In this way, a linear CPE and a non-linear CPE do not affect each other because they are separate in terms of time.

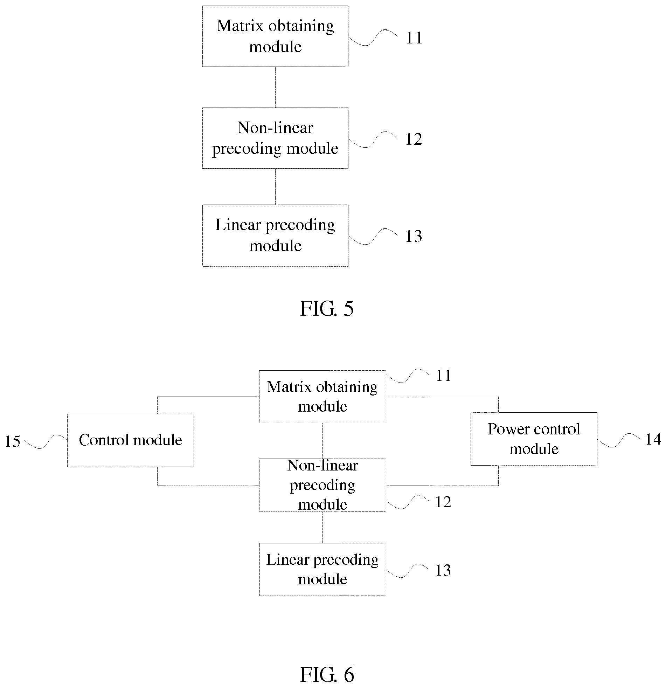

FIG. 5 is a schematic structural diagram of an embodiment of a CO apparatus according to the present invention. As shown in FIG. 5, the apparatus in this embodiment may include: a matrix obtaining module 11, a non-linear precoding module 12, and a linear precoding module 13. The channel obtaining module 11 is configured to: obtain a channel matrix on each subcarrier, where the channel matrix includes channel vectors of all CPEs on the subcarrier, and the CPEs include a linear CPE supporting linear precoding and a non-linear CPE supporting non-linear precoding; and obtain a precoding matrix by means of calculation according to the channel matrix. The precoding matrix includes a precoding submatrix used to eliminate crosstalk between non-linear CPEs, a precoding submatrix used to eliminate crosstalk between linear CPEs, and a precoding submatrix used to eliminate crosstalk between the non-linear CPE and the linear CPE. The non-linear precoding module 12 is configured to perform, according to the channel matrix, non-linear precoding on a signal to be sent to the non-linear CPE. The linear precoding module 13 is configured to perform linear precoding on to-be-sent signals according to the precoding matrix. The to-be-sent signals include a signal to be sent to the linear CPE and the signal that is to be sent to the non-linear CPE and on which non-linear precoding has been performed.

The apparatus in this embodiment may be configured to execute the technical solution of the method embodiment shown in FIG. 1. Implementation principles and technical effects thereof are similar, and details are not described herein again.

Further, the matrix obtaining module 11 is specifically configured to obtain the precoding matrix by means of calculation according to the channel matrix and by using a preset method.

FIG. 6 is a schematic structural diagram of another embodiment of a CO apparatus according to the present invention. As shown in FIG. 6, based on a structure of the apparatus shown in FIG. 5, the apparatus in this embodiment may further include: a power control module 14 and a control module 15. The power control module 14 is configured to: obtain a power control matrix by means of calculation according to the precoding matrix, where the power control matrix includes a power control factor for performing power control on the signal to be sent to the linear CPE, and a power control factor for performing power control on the signal to be sent to the non-linear CPE; and perform, according to the power control matrix, power control on the signal to be sent to the linear CPE and the signal to be sent to the non-linear CPE, and send the power control factors in the power control matrix to the non-linear CPE and the linear CPE respectively.

The control module 15 is configured to: determine, according to the channel matrix or the power control matrix, whether a single precoding manner is used for each subcarrier; and if a determining result is that the single precoding manner is used, determine that on the subcarrier, non-linear precoding is performed on the signal to be sent to the linear CPE and the signal to be sent to the non-linear CPE; or if a determining result is that the single precoding manner is not used, determine that on the subcarrier, the steps of the method shown in FIG. 1 or FIG. 2 are performed to precode the signal to be sent to the linear CPE and the signal to be sent to the non-linear CPE.

The apparatus in this embodiment may be configured to execute the technical solution of the method embodiment shown in any one of FIG. 1 to FIG. 3. Implementation principles and technical effects thereof are similar, and details are not described herein again.

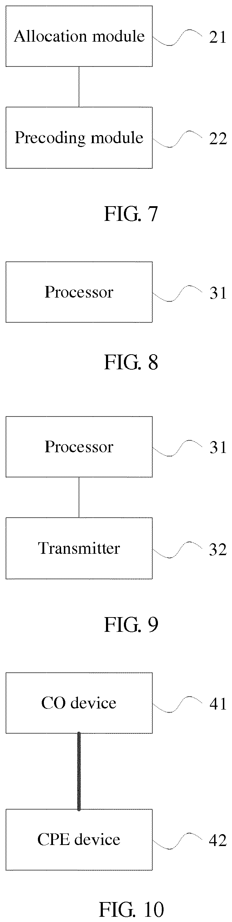

FIG. 7 is a schematic structural diagram of still another embodiment of a CO apparatus according to the present invention. As shown in FIG. 7, the apparatus in this embodiment may include: an allocation module 21 and a precoding module 22. The allocation module 21 is configured to divide a downlink timeslot into a non-linear timeslot and a linear timeslot according to a preset timeslot allocation method. The precoding module 22 is configured to: in the non-linear timeslot, send a signal to a non-linear CPE on all subcarriers and perform non-linear precoding on the signal; and in the linear timeslot, send a signal to a linear CPE on all the subcarriers and perform linear precoding on the signal.

The apparatus in this embodiment may be configured to execute the technical solution of the method embodiment shown in FIG. 4. Implementation principles and technical effects thereof are similar, and details are not described herein again.

FIG. 8 is a schematic structural diagram of an embodiment of a CO device according to the present invention. As shown in FIG. 8, the apparatus in this embodiment may include a processor 31, configured to: obtain a channel matrix on each subcarrier, where the channel matrix includes channel vectors of all CPEs on the subcarrier, and the CPEs include a linear CPE supporting linear precoding and a non-linear CPE supporting non-linear precoding; obtain a precoding matrix by means of calculation according to the channel matrix, where the precoding matrix includes a precoding submatrix used to eliminate crosstalk between non-linear CPEs, a precoding submatrix used to eliminate crosstalk between linear CPEs, and a precoding submatrix used to eliminate crosstalk between the non-linear CPE and the linear CPE; perform, according to the channel matrix, non-linear precoding on a signal to be sent to the non-linear CPE; and perform linear precoding on to-be-sent signals according to the precoding matrix, where the to-be-sent signals include a signal to be sent to the linear CPE and the signal that is to be sent to the non-linear CPE and on which non-linear precoding has been performed.

The apparatus in this embodiment may be configured to execute the technical solution of the method embodiment shown in FIG. 1. Implementation principles and technical effects thereof are similar, and details are not described herein again.

Further, the processor 31 is specifically configured to obtain the precoding matrix by means of calculation according to the channel matrix and by using a preset method.

FIG. 9 is a schematic structural diagram of another embodiment of a CO device according to the present invention. As shown in FIG. 9, based on a structure of the device shown in FIG. 8, the apparatus in this embodiment may further include a transmitter 32. The processor 31 is further configured to: obtain a power control matrix by means of calculation according to the precoding matrix, where the power control matrix includes a power control factor for performing power control on the signal to be sent to the linear CPE, and a power control factor for performing power control on the signal to be sent to the non-linear CPE; and perform, according to the power control matrix, power control on the signal to be sent to the linear CPE and the signal to be sent to the non-linear CPE. The transmitter 32 is configured to send the power control factors in the power control matrix to the non-linear CPE and the linear CPE respectively.

The apparatus in this embodiment may be configured to execute the technical solution of the method embodiment shown in FIG. 1 or FIG. 2. Implementation principles and technical effects thereof are similar, and details are not described herein again.

Further, the processor 31 is configured to: determine, according to the channel matrix or the power control matrix, whether a single precoding manner is used for each subcarrier; and if a determining result is that the single precoding manner is used, determine that on the subcarrier, non-linear precoding is performed on the signal to be sent to the linear CPE and the signal to be sent to the non-linear CPE; or if a determining result is that the single precoding manner is not used, determine that on the subcarrier, the method according to any one of claims 1 to 3 is used to precode the signal to be sent to the linear CPE and the signal to be sent to the non-linear CPE.

Further, the processor 31 is configured to divide a downlink timeslot into a non-linear timeslot and a linear timeslot according to a preset timeslot allocation method; in the non-linear timeslot, send a signal to the non-linear CPE on all subcarriers and perform non-linear precoding on the signal; and in the linear timeslot, send a signal to the linear CPE on all the subcarriers and perform linear precoding on the signal.

FIG. 10 is a schematic structural diagram of an embodiment of a DSL system according to the present invention. As shown in FIG. 10, the system in this embodiment includes a CO device 41 and a CPE device 42. The CO device 41 and the CPE device 42 are connected by using a twisted pair (the twisted pair is represented by a bold line in the figure). The CO device 41 may use a structure in the device embodiment shown in FIG. 8 or FIG. 9, and correspondingly, may execute the technical solution of any method embodiment in FIG. 1 to FIG. 4. Implementation principles and technical effects thereof are similar, and details are not described herein again.

In the several embodiments provided in the present invention, it should be understood that the disclosed apparatus and method may be implemented in other manners. For example, the described apparatus embodiment is merely for illustration purposes. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention.

Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the present invention, as defined by the appended claims.

**Claims**

1. A precoding method for a digital subscriber line, DSL, system comprising a central office, CO, device and customer premises equipment, CPE, devices, comprising:

   obtaining, at the CO device, a channel matrix (101) on each subcarrier, wherein the channel matrix comprises channel vectors of all customer premises equipments, CPEs, on the subcarrier, and the CPEs comprise a linear CPE supporting linear precoding and a non-linear CPE supporting non-linear precoding;
   obtaining, at the CO device, a precoding matrix (102) by means of calculation according to the channel matrix, wherein the precoding matrix comprises a precoding submatrix used to eliminate crosstalk between non-linear CPEs, a precoding submatrix used to eliminate crosstalk between linear CPEs, and a precoding submatrix used to eliminate crosstalk between the non-linear CPE and the linear CPE;
   performing, at the CO device, according to the channel matrix, non-linear precoding (103) on a signal to be sent to the non-linear CPE; and
   performing, at the CO device, linear precoding (104) on to-be-sent signals according to the precoding matrix, wherein the to-be-sent signals comprise a signal to be sent to the linear CPE and the signal that is to be sent to the non-linear CPE and on which non-linear precoding has been performed.

2. The method according to claim 1, wherein the obtaining a precoding (102) matrix by means of calculation according to the channel matrix comprises:
   obtaining the precoding matrix by means of calculation according to the channel matrix and by using a preset method.

3. The method according to claim 1 or 2, before the performing, according to the channel matrix, non-linear precoding (104) on a signal to be sent to the non-linear CPE, further comprising:

   obtaining a power control matrix (203) by means of calculation according to the precoding matrix, wherein the power control matrix comprises a power control factor for performing power control on the signal to be sent to the linear CPE, and a power control factor for performing power control on the signal to be sent to the non-linear CPE; and
   performing, according to the power control matrix, power control (204) on the signal to be sent to the linear CPE and the signal to be sent to the non-linear CPE, and sending the power control factors in the power control matrix to the non-linear CPE and the linear CPE respectively.

4. The method according to any one of claims 1 to 3, wherein the method is executed by a central office, CO, device.

5. A central office CO, apparatus for a digital subscriber line, DSL, system comprising the CO and customer premises equipments, CPEs, comprising:

   a matrix obtaining module (11), configured to: obtain a channel matrix on each subcarrier, wherein the channel matrix comprises channel vectors of all CPEs on the subcarrier, and the CPEs comprise a linear CPE supporting linear precoding and a non-linear CPE supporting non-linear precoding; and obtain a precoding matrix by means of calculation according to the channel matrix, wherein the precoding matrix comprises a precoding submatrix used to eliminate crosstalk between non-linear CPEs, a precoding submatrix used to eliminate crosstalk between linear CPEs, and a precoding submatrix used to eliminate crosstalk between the non-linear CPE and the linear CPE;

a non-linear precoding module (12), configured to perform, according to the channel matrix, non-linear precoding on a signal to be sent to the non-linear CPE; and

a linear precoding module (13), configured to perform linear precoding on to-be-sent signals according to the precoding matrix, wherein the to-be-sent signals comprise a signal to be sent to the linear CPE and the signal that is to be sent to the non-linear CPE and on which non-linear precoding has been performed.

6.  The apparatus according to claim 5, wherein the matrix obtaining module (11) is specifically configured to obtain the precoding matrix by means of calculation according to the channel matrix and by using a preset method.

7.  The apparatus according to claim 5 or 6, further comprising:
    a power control module (14), configured to: obtain a power control matrix by means of calculation according to the precoding matrix, wherein the power control matrix comprises a power control factor for performing power control on the signal to be sent to the linear CPE, and a power control factor for performing power control on the signal to be sent to the non-linear CPE; and perform, according to the power control matrix, power control on the signal to be sent to the linear CPE and the signal to be sent to the non-linear CPE, and send the power control factors in the power control matrix to the non-linear CPE and the linear CPE respectively.

8.  The central office, CO, apparatus (41) according to claim 5, further comprising:
    a processor configured to act as the matrix obtaining module (11), the non-linear precoding module (12) and the linear precoding module (13).

9.  The apparatus (41) according to claim 8, wherein the processor (31) is specifically configured to obtain the precoding matrix by means of calculation according to the channel matrix and by using a preset method.

10. The apparatus (41) according to claim 8 or 9, further comprising a transmitter (32),
    wherein
    the processor (31) is further configured to: obtain a power control matrix by means of calculation according to the precoding matrix, wherein the power control matrix comprises a power control factor for performing power control on the signal to be sent to the linear CPE, and a power control factor for performing power control on the signal to be sent to the non-linear CPE; and perform, according to the power control matrix, power control on the signal to be sent to the linear CPE and the signal to be sent to the non-linear CPE; and
    the transmitter (32) is configured to send the power control factors in the power control matrix to the non-linear CPE and the linear CPE respectively.

11. A digital subscriber line, DSL, system, comprising a central office, CO, apparatus (41) and a customer premises equipment, CPE, device (42), wherein the CO apparatus (41) and the CPE device (42) are connected by using a twisted pair, and the CO apparatus (41) is the apparatus according to any one of claims 8 to 10.

**Patentansprüche**

1.  Vorcodierungsverfahren für ein digitales Teilnehmerleitungssystem, DSL-System, das eine Zentralstelleneinrichtung, CO-Einrichtung, und Kundenstandortgeräteeinrichtungen, CPE-Einrichtungen, umfasst, das Folgendes umfasst:

    Erhalten einer Kanalmatrix (101) auf jedem Unterträger bei der CO-Einrichtung, wobei die Kanalmatrix Kanalvektoren von allen Kundenstandortgeräten, CPEs, auf dem Unterträger enthält und die CPEs ein lineares CPE, das lineares Vorcodieren unterstützt, und ein nichtlineares CPE, das nichtlineares Vorcodieren unterstützt, umfassen;
    Erhalten einer Vorcodierungsmatrix (102) mittels Berechnung gemäß der Kanalmatrix bei der CO-Einrichtung, wobei die Vorcodierungsmatrix eine Vorcodierungsuntermatrix, die verwendet wird, um ein Übersprechen zwischen nichtlinearen CPEs zu beseitigen, eine Vorcodierungsuntermatrix, die verwendet wird, um ein Übersprechen zwischen linearen CPEs zu beseitigen, und eine Vorcodierungsuntermatrix, die verwendet wird, um ein Übersprechen zwischen dem nichtlinearen CPE und dem linearen CPE zu beseitigen, umfasst;
Durchführen bei der CO-Einrichtung gemäß der Kanalmatrix einer nichtlinearen Vorcodierung (103) an einem Signal, das zum nichtlinearen CPE gesendet werden soll; und
Durchführen bei der CO-Einrichtung gemäß der Vorcodierungsmatrix einer linearen Vorcodierung (104) an zu sendenden Signalen, wobei die zu sendenden Signale ein Signal, das zum linearen CPE gesendet werden soll, und das Signal, das zum nichtlinearen CPE gesendet werden soll und an dem eine nichtlineare Vorcodierung durchgeführt worden ist, umfassen.

2. Verfahren nach Anspruch 1, wobei das Erhalten einer Vorcodierungsmatrix (102) mittels Berechnung gemäß der Kanalmatrix Folgendes umfasst:
Erhalten der Vorcodierungsmatrix mittels Berechnung gemäß der Kanalmatrix und unter Verwendung eines voreingestellten Verfahrens.

3. Verfahren nach Anspruch 1 oder 2, das vor dem Durchführen gemäß der Kanalmatrix einer nichtlinearen Vorcodierung (104) an einem Signal, das zum nichtlinearen CPE gesendet werden soll, ferner Folgendes umfasst:

Erhalten einer Leistungssteuermatrix (203) mittels Berechnung gemäß der Vorcodierungsmatrix, wobei die Leistungssteuermatrix einen Leistungssteuerfaktor, um die Leistungssteuerung an dem Signal, das zum linearen CPE gesendet werden soll, durchzuführen, und einen Leistungssteuerfaktor, um die Leistungssteuerung an dem Signal, das zum nichtlinearen CPE gesendet werden soll, enthält; und
Durchführen gemäß der Leistungssteuermatrix einer Leistungssteuerung (204) an dem Signal, das zum linearen CPE gesendet werden soll, und dem Signal, das zum nichtlinearen CPE gesendet werden soll, und Senden der Leistungssteuerfaktoren in der Leistungssteuermatrix zum nichtlinearen CPE bzw. dem linearen CPE.

4. Verfahren nach einem der Ansprüche 1 bis 3, wobei das Verfahren durch eine Zentralstelleneinrichtung, CO-Einrichtung, ausgeführt wird.

5. Zentralstellenvorrichtung, CO-Vorrichtung, für ein digitales Teilnehmerleitungssystem, DSL-System, das die CO und Kundenstandortgeräte, CPEs, umfasst, die Folgendes umfasst:

ein Matrixerhaltungsmodul (11), das konfiguriert ist, auf jedem Unterträger bei der eine Kanalmatrix (101) zu erhalten, wobei die Kanalmatrix Kanalvektoren von allen CPEs auf dem Unterträger enthält und die CPEs ein lineares CPE, das lineares Vorcodieren unterstützt, und ein nichtlineares CPE, das nichtlineares Vorcodieren unterstützt, umfassen, und eine Vorcodierungsmatrix mittels Berechnung gemäß der Kanalmatrix zu erhalten, wobei die Vorcodierungsmatrix eine Vorcodierungsuntermatrix, die verwendet wird, um ein Übersprechen zwischen nichtlinearen CPEs zu beseitigen, eine Vorcodierungsuntermatrix, die verwendet wird, um ein Übersprechen zwischen linearen CPEs zu beseitigen, und eine Vorcodierungsuntermatrix, die verwendet wird, um ein Übersprechen zwischen dem nichtlinearen CPE und dem linearen CPE zu beseitigen, umfasst;
ein nichtlineares Vorcodierungsmodul (12), das konfiguriert ist, gemäß der Kanalmatrix eine nichtlineare Vorcodierung an einem Signal, das zum nichtlinearen CPE gesendet werden soll, durchzuführen; und
ein lineares Vorcodierungsmodul (13), das konfiguriert ist, eine lineare Vorcodierung (104) an zu sendenden Signalen gemäß der Vorcodierungsmatrix durchzuführen, wobei die zu sendenden Signale ein Signal, das zum linearen CPE gesendet werden soll, und das Signal, das zum nichtlinearen CPE gesendet werden soll und an dem eine nichtlineare Vorcodierung durchgeführt worden ist, umfassen.

6. Vorrichtung nach Anspruch 5, wobei das Matrixerhaltungsmodul (11) speziell konfiguriert ist, die Vorcodierungsmatrix mittels Berechnung gemäß der Kanalmatrix und unter Verwendung eines voreingestellten Verfahrens zu erhalten.

7. Vorrichtung nach Anspruch 5 oder 6, die ferner Folgendes umfasst:
ein Leistungssteuermodul (14), das konfiguriert ist, eine Leistungssteuermatrix mittels Berechnung gemäß der Vorcodierungsmatrix zu erhalten, wobei die Leistungssteuermatrix einen Leistungssteuerfaktor, um die Leistungssteuerung an dem Signal, das zum linearen CPE gesendet werden soll, durchzuführen, und einen Leistungssteuerfaktor, um die Leistungssteuerung an dem Signal, das zum nichtlinearen CPE gesendet werden soll, enthält; und gemäß der Leistungssteuermatrix eine Leistungssteuerung an dem Signal, das zum linearen CPE gesendet werden soll, und dem Signal, das zum nichtlinearen CPE gesendet werden soll, durchzuführen und die Leistungssteuerfaktoren in der Leistungssteuermatrix zum nichtlinearen CPE bzw. zum linearen CPE zu senden.

**8.** Zentralstellenvorrichtung, CO-Vorrichtung, (41) nach Anspruch 5, die ferner Folgendes umfasst:
einen Prozessor, der konfiguriert ist, als das Matrixerhaltungsmodul (11), das nichtlineare Vorcodierungsmodul (12) und das lineare Vorcodierungsmodul (13) zu agieren.

**9.** Vorrichtung (41) nach Anspruch 8, wobei der Prozessor (31) speziell konfiguriert ist, die Vorcodierungsmatrix mittels Berechnung gemäß der Kanalmatrix und unter Verwendung eines voreingestellten Verfahrens zu erhalten.

**10.** Vorrichtung (41) nach Anspruch 8 oder 9, die ferner einen Sender (32) umfasst, wobei
der Prozessor (31) ferner konfiguriert ist, eine Leistungssteuermatrix mittels Berechnung gemäß der Vorcodierungsmatrix zu erhalten, wobei die Leistungssteuermatrix einen Leistungssteuerfaktor, um die Leistungssteuerung an dem Signal, das zum linearen CPE gesendet werden soll, durchzuführen, und einen Leistungssteuerfaktor, um die Leistungssteuerung an dem Signal, das zum nichtlinearen CPE gesendet werden soll, enthält; und gemäß der Leistungssteuermatrix eine Leistungssteuerung an dem Signal, das zum linearen CPE gesendet werden soll, und dem Signal, das zum nichtlinearen CPE gesendet werden soll, durchzuführen und
der Sender (32) konfiguriert ist, die Leistungssteuerfaktoren in der Leistungssteuermatrix zum nichtlinearen CPE bzw. zum linearen CPE zu senden

**11.** Digitales Teilnehmerleitungssystem, DSL-System, das eine Zentralstelleneinrichtung, CO-Vorrichtung, (41) und eine Kundenstandortgeräteeinrichtung, CPE-Einrichtung, (42) umfasst, wobei die CO-Vorrichtung (41) und die CPE-Einrichtung (42) unter Verwendung eines verdrillten Doppelkabels verbunden sind und die CO-Vorrichtung (41) die Vorrichtung gemäß einem der Ansprüche 8 bis 10 ist.

## Revendications

**1.** Procédé de pré-codage pour un système de ligne d'abonné numérique (DSL) comprenant un dispositif de central téléphonique (CO) et des dispositifs d'équipement des locaux d'abonné (CPE), consistant :

à obtenir, au niveau du dispositif de central CO, une matrice de canal (101) sur chaque sous-porteuse, la matrice de canal comprenant des vecteurs de canal de tous les équipements des locaux d'abonné (CPE) sur la sous-porteuse, et les équipements CPE comprenant un équipement CPE linéaire prenant en charge un précodage linéaire et un équipement CPE non linéaire prenant en charge un précodage non linéaire ;
à obtenir, au niveau du dispositif de central CO, une matrice de précodage (102) au moyen d'un calcul en fonction de la matrice de canal, la matrice de précodage comprenant une sous-matrice de précodage utilisée pour éliminer une diaphonie entre des équipements CPE non linéaires, une sous-matrice de précodage utilisée pour éliminer une diaphonie entre des équipements CPE linéaires et une sous-matrice de précodage utilisée pour éliminer une diaphonie entre les équipements CPE non linéaires et les équipements CPE linéaires ;
à effectuer, au niveau du dispositif de central CO, en fonction de la matrice de canal, un précodage non linéaire (103) sur un signal qui doit être envoyé à l'équipement CPE non linéaire ; et
à effectuer, au niveau du dispositif de central CO, un précodage linéaire (104) sur des signaux qui doivent être envoyés en fonction de la matrice de précodage, les signaux qui doivent être envoyés, comprenant un signal qui doit être envoyé à l'équipement CPE linéaire et le signal qui doit être envoyé à l'équipement CPE non linéaire et sur lequel un précodage non linéaire a été effectué.

**2.** Procédé selon la revendication 1, dans lequel l'obtention d'une matrice de précodage (102) au moyen d'un calcul en fonction de la matrice de canal consiste :
à obtenir la matrice de précodage au moyen d'un calcul en fonction de la matrice de canal et en utilisant un procédé prédéfini.

**3.** Procédé selon la revendication 1 ou 2, avant la réalisation, en fonction de la matrice de canal, d'un précodage non linéaire (104) sur un signal qui doit être envoyé à l'équipement CPE non linéaire, consistant en outre :

à obtenir une matrice de commande de puissance (203) au moyen d'un calcul en fonction de la matrice de précodage, la matrice de commande de puissance comprenant un facteur de commande de puissance pour effectuer une commande de puissance sur le signal qui doit être envoyé à l'équipement CPE linéaire, et un facteur de commande de puissance pour effectuer une commande de puissance sur le signal qui doit être envoyé à l'équipement CPE non linéaire ; et
à effectuer, en fonction de la matrice de commande de puissance, une commande de puissance (204) sur le signal qui doit être envoyé à l'équipement CPE linéaire et sur le signal qui doit être envoyé à l'équipement CPE non linéaire, et à envoyer les facteurs de commande de puissance dans la matrice de commande de puissance à l'équipement CPE non linéaire et à l'équipement CPE linéaire, respectivement.

4. Procédé selon l'une quelconque des revendications 1 à 3, dans lequel le procédé est exécuté par un dispositif de central téléphonique (CO).

5. Appareil de central téléphonique (CO) pour un système de ligne d'abonné numérique (DSL) comprenant le central CO et des équipements des locaux d'abonné (CPE), comprenant :

un module d'obtention de matrice (11), configuré : pour obtenir une matrice de canal sur chaque sous-porteuse, la matrice de canal comprenant des vecteurs de canal de tous les équipements CPE sur la sous-porteuse, et les équipements CPE comprenant un équipement CPE linéaire prenant en charge un précodage linéaire et un équipement CPE non linéaire prenant en charge un précodage non linéaire ; et pour obtenir une matrice de précodage au moyen d'un calcul en fonction de la matrice de canal, la matrice de précodage comprenant une sous-matrice de précodage utilisée pour éliminer une diaphonie entre des équipements CPE non linéaires, une sous-matrice de précodage utilisée pour éliminer une diaphonie entre des équipements CPE linéaires et une sous-matrice de précodage utilisée pour éliminer une diaphonie entre les équipements CPE non linéaires et les équipements CPE linéaires ;
un module de précodage non linéaire (12), configuré pour effectuer, en fonction de la matrice de canal, un précodage non linéaire sur un signal qui doit être envoyé à l'équipement CPE non linéaire ; et
un module de précodage linéaire (13), configuré pour effectuer un précodage linéaire sur des signaux qui doivent être envoyés en fonction de la matrice de précodage les signaux qui doivent être envoyés, comprenant un signal qui doit être envoyé à l'équipement CPE linéaire et le signal qui doit être envoyé à l'équipement CPE non linéaire et sur lequel un précodage non linéaire a été effectué.

6. Appareil selon la revendication 5, dans lequel le module d'obtention de matrice (11) est spécialement configuré pour obtenir la matrice de précodage au moyen d'un calcul en fonction de la matrice de canal et en utilisant un procédé prédéfini.

7. Appareil selon la revendication 5 ou 6, comprenant en outre :
un module de commande de puissance (14), configuré : pour obtenir une matrice de commande de puissance au moyen d'un calcul en fonction de la matrice de précodage, la matrice de commande de puissance comprenant un facteur de commande de puissance pour effectuer une commande de puissance sur le signal qui doit être envoyé à l'équipement CPE linéaire, et un facteur de commande de puissance pour effectuer une commande de puissance sur le signal qui doit être envoyé à l'équipement CPE non linéaire ; et pour effectuer, en fonction de la matrice de commande de puissance, une commande de puissance sur le signal qui doit être envoyé à l'équipement CPE linéaire et sur le signal qui doit être envoyé à l'équipement CPE non linéaire, et pour envoyer les facteurs de commande de puissance dans la matrice de commande de puissance à l'équipement CPE non linéaire et à l'équipement CPE linéaire, respectivement.

8. Appareil de central téléphonique (CO) (41) selon la revendication 5, comprenant en outre :
un processeur configuré pour faire office de module d'obtention de matrice (11), de module de précodage non linéaire (12) et de module de précodage linéaire (13).

9. Appareil (41) selon la revendication 8, dans lequel le processeur (31) est spécialement configuré pour obtenir la matrice de précodage au moyen d'un calcul en fonction de la matrice de canal et en utilisant un procédé prédéfini.

10. Appareil (41) selon la revendication 8 ou 9, comprenant en outre un émetteur (32), dans lequel
le processeur (31) est en outre configuré : pour obtenir une matrice de commande de puissance au moyen d'un calcul en fonction de la matrice de précodage, la matrice de commande de puissance comprenant un facteur de commande de puissance pour effectuer une commande de puissance sur le signal qui doit être envoyé à l'équipement CPE linéaire, et un facteur de commande de puissance pour effectuer une commande de puissance sur le signal qui doit être envoyé à l'équipement CPE non linéaire ; et pour effectuer, en fonction de la matrice de commande de puissance, une commande de puissance sur le signal qui doit être envoyé à l'équipement CPE linéaire et sur le signal qui doit être envoyé à l'équipement CPE non linéaire ; et
l'émetteur (32) est configuré pour envoyer les facteurs de commande de puissance dans la matrice de commande de puissance à l'équipement CPE non linéaire et à l'équipement CPE linéaire, respectivement.

11. Système de ligne d'abonné numérique (DSL) comprenant un appareil de central téléphonique (CO) (41) et un dispositif d'équipement des locaux d'abonné (CPE) (42), dans lequel l'appareil de central CO (41) et le dispositif d'équipement CPE (42) sont connectés en utilisant une paire torsadée et l'appareil de central CO (41) est l'appareil selon l'une quelconque des revendications 8 à 10.

**EP 3 236 605 B1**

```
┌─────────────────────────────────────────────────────┐
│         Obtain a channel matrix on each subcarrier   │      101
└─────────────────────────────────────────────────────┘
                          │
                          ▼
┌─────────────────────────────────────────────────────┐
│  Obtain a precoding matrix by means of calculation   │      102
│            according to the channel matrix           │
└─────────────────────────────────────────────────────┘
                          │
                          ▼
┌─────────────────────────────────────────────────────┐
│ Perform, according to the channel matrix, non-linear │      103
│   precoding on a signal to be sent to a non-linear   │
│                        user                          │
└─────────────────────────────────────────────────────┘
                          │
                          ▼
┌─────────────────────────────────────────────────────┐
│ Perform linear precoding on to-be-sent signals       │      104
│      according to the precoding matrix               │
└─────────────────────────────────────────────────────┘
```

FIG. 1

16

| Obtain a channel matrix H on each subcarrier | 201 |

↓

| Obtain a precoding matrix P by means of calculation according to the channel matrix H and by using a preset method | 202 |

↓

| Obtain a power control matrix C by means of calculation according to the precoding matrix P | 203 |

↓

| Perform, according to the power control matrix C, power control on a signal $X_L$ to be sent to a linear CPE and a signal $X_N$ to be sent to a non-linear CPE, and send power control factors in the power control matrix C to the non-linear CPE and the linear CPE respectively | 204 |

↓

| Obtain, by means of calculation according to a submatrix $H_{NN}$ of the channel matrix H, non-linear precoding matirices, that is, a unitary matrix Q and an upper triangular matrix R | 205 |

↓

| Perform, according to the unitary matrix Q and the upper triangular matrix R, non-linear precoding on the signal $X_N$ to be sent to the non-linear CPE | 206 |

↓

| Perform linear precoding on to-be-sent signals according to the precoding matrix P | 207 |

FIG. 2

Determine, according to a channel matrix H or a power control matrix C, whether a single precoding manner is used for each subcarrier | 301

If a determining result is that the single precoding manner is used, determine that on the subcarrier, non-linear precoding is performed on a signal $X_L$ to be sent to a linear CPE and a signal $X_N$ to be sent to a non-linear CPE | 302

If a determining result is that the single precoding manner is not used, determine that on the subcarrier, hybrid precoding is used to precode a signal $X_L$ to be sent to a linear CPE and a signal $X_N$ to be sent to a non-linear CPE | 303

FIG. 3

Divide a downlink timeslot into a non-linear timeslot and a linear timeslot according to a preset timeslot allocation method | 401

In the non-linear timeslot, send a signal to a non-linear CPE on all subcarriers, and perform non-linear precoding on the signal | 402

In the linear timeslot, send a signal to a linear CPE on all the subcarriers, and perform linear precoding on the signal | 403

FIG. 4

Matrix obtaining
module     11

Non-linear
precoding module     12

Linear precoding
module     13

FIG. 5

Matrix obtaining
module     11

15   Control module

Power control
module     14

Non-linear
precoding
module     12

Linear precoding
module     13

FIG. 6

| Allocation module | 21 |

| Precoding module | 22 |

FIG. 7

| Processor | 31 |

FIG. 8

| Processor | 31 |

| Transmitter | 32 |

FIG. 9

| CO device | 41 |

| CPE device | 42 |

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014054043 A1